# EUROPEAN PATENT SPECIFICATION

(11) **EP 4 616 681 B1**
(45) Date of publication and mention of the grant of the patent: **15.07.2026**
(21) Application number: 23798800.1
(22) Date of filing: 02.11.2023
(51) Int. Cl.: H05B 45/20, H05B 47/155

(54) **A CONTROLLER FOR CONTROLLING A PLURALITY OF LIGHT SOURCES OF WHICH A COLOR AND/OR BRIGHTNESS CAN BE INDIVIDUALLY CONTROLLED**
STEUERGERÄT ZUR STEUERUNG MEHRERER LICHTQUELLEN MIT INDIVIDUELLER STEUERUNG EINER FARBE UND/ODER HELLIGKEIT
CONTRÔLEUR POUR COMMANDER UNE PLURALITÉ DE SOURCES DE LUMIÈRE DONT UNE COULEUR ET/OU UNE LUMINOSITÉ PEUT ÊTRE COMMANDÉE INDIVIDUELLEMENT

(30) Priority: 08.11.2022 EP 22206232; 09.02.2023 EP 23155821
(43) Date of publication of application: 17.09.2025
(73) Proprietor: Signify Holding B.V., 5656 AE Eindhoven (NL)
(72) Inventor: OSTOJIC, Aleksandar, 5656 AE Eindhoven (NL); ALIAKSEYEU, Dzmitry, Viktorovich, 5656 AE Eindhoven (NL)
(74) Representative: Verweij, Petronella Daniëlle
(86) International application number: PCT/EP2023/080508
(87) International publication number: WO 2024/099856

(56) References cited:
- WO-A1-2020/249543
- WO-A1-2022/043220

## Description

### FIELD OF THE INVENTION

The invention relates to a controller for controlling a plurality of light sources of which a color and/or brightness can be individually controlled. The invention further relates to a system for controlling a plurality of light sources of which a color and/or brightness can be individually controlled. The invention further relates to a method and computer program for controlling a plurality of light sources of which a color and/or brightness can be individually controlled.

### BACKGROUND

Connected lighting systems may enable the rendering of a dynamic light scene, i.e., a light scene providing a light output that changes over time. A dynamic light scene can create an ambience that is considered pleasant by a user. As an example, such a dynamic light scene may be predetermined and selectable by a user, such as a wake-up light scene in which lights slowly dim up to gently wake a user up. As a further example, such a dynamic light scene may comprise rendering by all (or some) light sources a random color and/or brightness over time.

Each light scene may be defined by a respective set of light settings (light scene data set) for a group of light sources (lamps) that belong to that scene. Each light setting contains information on which lamps belong to it and defines one or more lighting parameters for those lamps, such as color parameter(s) and/or brightness parameter (s), i.e., a color point and/or a brightness level at which each of the lamps is set.

A dynamic light scene is typically rendered on several spatially arranged individually controllable light sources, such as light sources in the periphery of a screen. However, further challenges arise when a dynamic light scene is rendered on a large number of proximate individually controllable light sources, such as a light string.

WO 2020/249543 A1 discloses methods for downscaling a set of light settings and controlling at least two lighting units of a lighting system based thereon. The method comprises obtaining and analyzing a set of lighting settings to extract one or more features of the light settings relating to characteristics of the lighting settings, and determining variability values for the light settings, wherein each variability value is indicative of a level of distinctness of one or more features of a respective light setting with respect to the same one or more features of the other light settings of the set of light settings.

### SUMMARY OF THE INVENTION

The inventors have realized that a problem arises when rendering a dynamic light scene that indicates a set of light settings which are to be rendered sequentially by a large number of individually controllable light sources. For example, a dynamic scene with a random color assignment (from a predetermined color palette) on each of the individually controllable light sources. It is desirable that a dynamic light scene provides to a user a pleasing and relaxing experience. However, the intended effect is hardly perceivable to the user. When the user's perception focuses on a single (or a small number) light source, differences (changes) in the color and/or brightness of that light source between the light settings are perceivable by the user. However, if the user's perception focuses on multiple proximate light sources, the differences in the color and/or brightness of the light sources are not visually perceivable by the user at a pre-determined distance. That is, a number of changes in color and/or brightness between the light settings are above a visual perceivability threshold. The human visual system may identify the color and/or brightness palette (set of colors) of said plurality of proximate individually controllable light sources, however, the actual physical (spatial) arrangement of the rendered colors and/or brightness is treated as noise.

It is therefore an object to control a plurality of light sources of which a color and/or brightness can be individually controlled such that dynamic light scene effects can be visually perceivable by the user. That is, differences (changes) in color and/or brightness between the light settings of a dynamic light scene can be visually perceivable by the user.

The invention is defined by a controller for controlling a plurality of light sources, as defined in claim 1, and by a method for controlling a plurality of light sources, as defined in claim 11. Further preferred embodiments are defined in the dependent claims.

According to a first aspect, the object is achieved by a controller for controlling a plurality of light sources of which a color and/or brightness can be individually controlled. The controller is configured to receive a dynamic light scene indicating at least a first light setting and a second light setting which are to be rendered sequentially by said plurality of light sources, identify a set of light sources of the plurality of light sources, which are proximate to each other, that is a distance between said set of light sources is below a proximity threshold and for which a difference score indicative of a perceptual difference between said first and second light setting is below a visual perceivability threshold. For example, the difference score may be indicative of a difference between (i) an average color and/or brightness to be rendered by said set of light sources according to said first light setting and (ii) an average color and/or brightness to be rendered by said set of light sources according to said second light setting.

The first light setting may indicate a first set of colors to be rendered by said set of light sources and the second light setting may indicate a second set of colors to be rendered by said set of light sources. The controller is configured to identify a set of light sources, which are proximate to each other, of the plurality of light sources and for which a difference score indicating the perceptual difference between said first and second light setting is below a visual perceivability threshold. That is, the controller is configured to identify the set of light sources for which: although the factual difference between the first and the second light settings is above a difference threshold (the intended effect), the perceptual difference between said first and said second light setting is below a visual perceivability threshold because a distance between said set of light sources is below a proximity threshold. For example, the controller may be configured to identify a set of light sources, which are proximate to each other, of the plurality of light sources and for which a color difference (distance in a color space) between said first and second sets of colors is below a visual perceivability threshold. Additionally, and or alternatively, the controller may be configured to identify a set of light sources, which are proximate to each other, of the plurality of light sources and for which a number of differences in color and/or brightness between said first and second light setting is below a visual perceivability threshold, i.e., a threshold below which differences (transitions) in color and/or brightness between the first and the second light setting are not perceivable by a human.

The controller is further configured to modify the received dynamic light scene, by determining a modified dynamic light scene, such that for said set of light sources the visual perceivability threshold is met that is, the difference score for said set of light sources is above (or equal) to the visual perceivability threshold, and control said plurality of light sources to render said modified dynamic light scene.

The human visual system may not perceive differences in color and/or brightness between a first and a second light setting if the difference score between the first and the second light setting is below a visual perceivability threshold, i.e., a threshold below which differences (transitions) in color and/or brightness between the first and the second light setting are not perceivable by a human. Identifying sets of proximate light sources for which said difference score is below a visual perceivability threshold enables to appropriately modify the dynamic light scene such that for said sets of light sources the visual perceivability threshold is met. This ensures that the dynamic changes (effects) of the dynamic light scene can be visually perceivable by the user (at least at a predetermined distance from the plurality of light sources).

The controller may be configured to modify the dynamic light scene by modifying the first, the second or both light settings of the received dynamic light scene. The controller may be configured to determine a modified first and/or second light setting, different from said respective first and/or second light setting, wherein the modified dynamic light scene is indicative of the first modified light setting and the second modified light setting, for which: a difference score indicative of the perceptual difference between said first and second modified light setting is above a visual perceivability threshold and a difference score indicative of the perceptual difference between said received dynamic light scene and said modified dynamic light scene is bellow an allowable modification setting. For example, the controller may be configured to determine a modified first and/or second light setting, for which: a difference score between (i) an average color and/or brightness to be rendered by said set of light sources according to said first modified light setting and (ii) an average color and/or brightness to be rendered by said set of light sources according to said modified second light setting is above a visual perceivability threshold, and a difference score between (i) an average color and/or brightness to be rendered by said set of light sources according to said light scene and (ii) an average color and/or brightness to be rendered by said set of light sources according to said modified light scene is below an allowable modification threshold. By modifying either the first, the second, or both the light settings such that there is sufficient difference in the average color and/or brightness between the first and the second modified light settings of the modified light scene, or there is sufficient color distance between the color palettes of the first and second modified light settings, the change (transition) from the first to the second modified setting may be visually perceived by the user. The (initial) received light scene and the modified light scene may not be considerably different (difference score in average color and/or brightness between received and modified scene may be bellow an allowable modification threshold), as this would result in a different intended effect of the dynamic scene. Preferably, the average color and/or brightness of the received dynamic scene may be approximately the same with the average color and/or brightness of the modified dynamic light scene to maintain the same intended effect (intended ambience) for the user.

The controller may be configured to modify said received dynamic light scene such that the number of changes in color between the first and the second modified light setting are reduced, i.e., the number of colors that are to be rendered at the same time according to said first and second modified light setting are reduced. The first light setting may indicate a first set of colors to be rendered by said set of light sources and the second light setting may indicate a second set of colors to be rendered by said set of light sources.

The controller may be configured to determine the modified first light setting by identifying a first subset of colors to be rendered by said set of light sources according to said first modified light setting. The first subset of colors may comprise colors from the first set of colors and/or second set of colors. Preferably, the first subset of colors comprises colors from the first set of colors. The controller may be further configured to determine the modified second light setting by identifying a second subset of colors, different from the first subset of colors, to be rendered by said set of light sources according to said second modified light setting. The second subset of colors may comprise colors from the first set of colors and/or second set of colors. Preferably, the second subset of colors comprises colors from the second set of colors. The first subset of colors and the second subset of colors are not entirely overlapping. Preferably, the first subset of colors and the second subset of colors are non-overlapping. For example, the first light setting may indicate a set of four colors, say, blue, red, green, yellow to be rendered by said set of light sources and the second light setting may indicate a second set of colors, say blue, red, green, pink to be rendered by said set of light sources. The controller may be configured to determine the modified first light setting by identifying a first subset of colors, blue, red, to be rendered by said set of light sources according to said first modified light setting and determine the modified second light setting by identifying a second subset of colors, say green and pink, to be rendered by said set of light sources according to said second modified light setting. Alternatively, the controller may be configured to determine the modified first light setting by assigning a higher probability on the first subset of colors, blue, red, to be rendered by said set of light sources according to said first modified light setting and assigning a lower probability on the second subset of colors, say green and pink, to be rendered by said set of light sources according to said second modified light setting. Rendering, by said set of light sources, a first and sequentially a second (not entirely overlapping) subset of colors allows a considerable difference score (above the threshold) between the first and the second modified light setting, which consequently allows the changes between the first and the second modified setting to be visually perceivable by the user. By choosing subset of colors comprising colors from the first set of colors and/or second set of colors, ensures that the difference score between (i) the average color to be rendered by said set of light sources according to said received dynamic light scene and (ii) the average color and/or brightness to be rendered by said set of light sources according to said modified light scene is below an allowable modification threshold. Thus, the same intended effect (intended ambience) is maintained for the user.

Alternatively, the controller may be configured to modify said received dynamic light scene such that changes in color may differentiate over space (position of effects in the set of light sources). The controller may be configured to determine the modified first light setting by identifying a first subset of colors to be rendered by a first subset of said set of light sources and a second subset of colors, different from the first subset of colors, to be rendered by a second subset of said set of light sources, said first and second subsets of colors comprising colors from the first set of colors and/or second set of colors, and wherein said first and second subset of colors and said first and second subset of said set of light sources are not entirely overlapping. Preferably, said first and second subset of colors and said first and second subset of said set of light sources are non-overlapping. The controller may be further configured to determine the modified second light setting by identifying the first subset of colors to be rendered by the second subset of said set of light sources and the second subset of colors to be rendered by the first subset of said set of light sources. For example, the first light setting may indicate a set of four colors, say, blue, red, green, and yellow to be rendered by said set of light sources and the second light setting may indicate a second set of colors, same as the first set of colors, to be rendered by said set of light sources. According to the first modified setting, a first subset of colors, say blue, red is to be rendered by a first subset of proximate light sources of said set of light sources. For example, light sources in the bottom part of a light string. A second subset of colors, say green, yellow, are to be rendered by a second subset of proximate light sources from said set of light sources. For example, light sources in the top part of a light string. This ensures that light effects are differentiated in space. According to the second modified setting, the first subset of colors, blue, red is to be rendered by the top part of the light string, while the second subset of colors, green, yellow, is to be rendered by the bottom part of the light string. Like this, the average color of the modified scene remains approximately the same as the received dynamic light scene. Thus, above the allowable modification threshold. The controller may be configured to determine an intermediate light setting to be rendered between said first and second light setting, for which: a difference score indicative of a perceptual difference between said first light setting and said intermediate light setting is above a visual perceivability threshold and a difference score indicative of a perceptual difference between said second light setting and said intermediate light setting is above a visual perceivability threshold. By adding an intermediate light setting between said first and second light setting, said intermediate light setting having a difference score for both the first (the preceding) and the second (the succeeding) light setting above the visual probability threshold ensures that the changes between the settings in the dynamic light scene are visually perceivable by the user.

The difference score may comprise an absolute difference between (i) the average color and/or brightness to be rendered by said set of light sources according to said first light setting and (ii) the average color and/or brightness to be rendered by said set of light sources according to said second light setting. The difference score may indicate a color difference (distance) between the first and second sets of colors to be rendered by said set of light sources according to the first and the second light setting respectively.

Alternatively, the difference score may comprise a probability of difference in color and/or brightness between (i) the average color and/or brightness to be rendered by said set of light sources according to said first light setting and (ii) the average color and/or brightness to be rendered by said set of light sources according to said second light setting. Or a probability of color difference between the first and second sets of colors. For example, if colors in the received light scene are indicated by a randomized function that assigns a probability to the plurality of light sources to render a color from a set of colors, then, it may not be possible to determine an absolute difference between the average color and/or brightness of the first and the second light scene (or color distance between the first and the second set of colors). In that case, a probability difference score that the average color and/or brightness between the first and the second light scene is above a visual perceivability threshold may be calculated.

The plurality of light sources may be comprised in a lighting device, and the controller may be configured to identify the set of light sources which are proximate to each other by receiving an input, for example a barcode, an image, etc., indicative of which light sources of said plurality of light sources are proximate to each other. Said input may comprise a relative (or actual) position of said plurality of light sources and/or a type of said lighting device. Receiving an input indicative of the relative position of the plurality of light sources enables the controller to identify sets of light sources that are proximate to each other. For example, the controller may be configured to identify a (predetermined) number of light sources adjacent to each other based on the relative position of the light sources in the device. In another example, the controller may be configured to identify a (predetermined) number of light sources adjacent to each other based on the type of the device, e.g., light string.

The controller may be further configured to receive an input indicative of an ambient light level and modify said received dynamic light scene based on said ambient level. This enables, for example, to modify the dynamic light scene only when the ambient light levels is above an ambient light threshold. In another example, the controller may modify the received dynamic light scene such that effects are visible in space when the ambient light level is below an ambient light threshold. Effects are more visible when they differentiate in space compared to differentiating in time.

According to a second aspect, the object is achieved by a system for controlling a plurality of light sources of which a color and/or brightness can be individually controlled, said system comprising said plurality of light sources, and a controller configured to:
- receive a dynamic light scene indicating at least a first light setting and a second light setting which are to be rendered sequentially by said plurality of light sources;
- identify a set of light sources of the plurality of light sources for which a distance between said set of light sources is below a proximity threshold and for which a difference score between (i) an average color and/or brightness to be rendered by said set of light sources according to said first light setting and (ii) an average color and/or brightness to be rendered by said set of light sources according to said second light setting is below a visual perceivability threshold;
- modify the received dynamic light scene, by determining a modified dynamic light scene, such that for said set of light sources the difference score is above the visual perceivability threshold, and
- control said plurality of light sources to render said modified dynamic light scene.

According to a third aspect, the object is achieved by a method for controlling a plurality of light sources of which a color and/or brightness can be individually controlled, said method comprising the steps of:
- receiving a dynamic light scene indicating at least a first light setting and a second light setting which are to be rendered sequentially by said plurality of light sources;
- identifying a set of light sources of the plurality of light sources for which a distance between said set of light sources is below a proximity threshold and for which a difference score indicative of a perceptual difference between said first and second light setting is below a visual perceivability threshold;
- modifying the received dynamic light scene, by determining a modified dynamic light scene, such that for said set of light sources the difference score is above the visual perceivability threshold, and
- controlling said plurality of light sources to render said modified dynamic light scene.

According to a fourth aspect, the object is achieved by a computer program for a computing device arranged for controlling a plurality of light sources, the computer program product comprising computer program code to perform the method of controlling a plurality of light sources of which a color and/or brightness can be individually controlled when the computer program product is run on a processing unit of the computing device.

It should be understood that the system, method and computer program product may have similar and/or identical embodiments and advantages as the above-mentioned controller.

### BRIEF DESCRIPTION OF THE DRAWINGS

The above, as well as additional objects, features and advantages of the disclosed devices, systems, and methods will be better understood through the following illustrative and non-limiting detailed description of embodiments of devices and methods, with reference to the appended drawings, in which:
Fig. 1 shows schematically a plurality of light sources of which color and/or brightness can be individually controlled;
Fig. 2 shows schematically a system for controlling a plurality of light sources of which color and/or brightness can be individually controlled;
Fig. 3 shows schematically an example of a device comprising a plurality of light sources;
Fig. 4 shows schematically a method of controlling a plurality of light sources.

All the figures are schematic, not necessarily to scale, and generally only show parts which are necessary in order to elucidate the invention, wherein other parts may be omitted or merely suggested.

### DETAILED DESCRIPTION

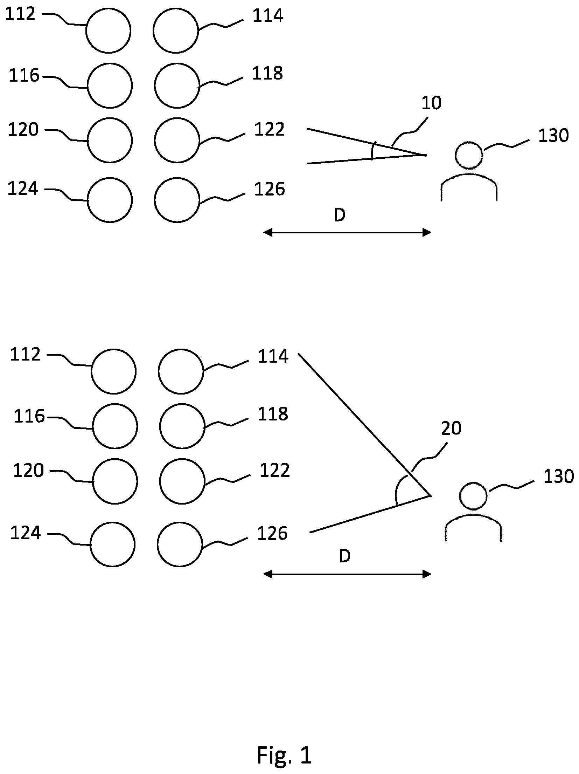

Fig. 1 shows an example of a problem that can arise when rendering a dynamic light scene in plurality of light sources 112-126 of which color and/or brightness can be individually controlled. The light sources 112-126 may be configured to render a dynamic light scene, said dynamic light scene indicating at least a first light setting and a second light setting which are to be rendered sequentially by said plurality of light sources 112-126. A light setting comprises information on which sets of light sources from said plurality of light sources 112-126 will render the light setting and defines one or more illumination settings for each light source 112-126, e.g., color setting(s) and/or brightness setting(s), such as a color point and/or a brightness at which each of the light sources 112-126 is set. Table 1 shows an example dynamic light scene indicating a first and a second light setting to rendered sequentially by said plurality of light sources 112-126.

**Table 1**

| Light source | 112 | 114 | 116 | 118 | 120 | 122 | 124 | 126 |
|---|---|---|---|---|---|---|---|---|
| 1^{st} light setting | Color: Red | Color: Green | Color: Yellow | Color: Blue | Color: Green | Color: Yellow | Color: Magenta | Color: Purple |
| 2^{nd} light setting | Color: Green | Color: Yellow | Color: Green | Color: Yellow | Color: Blue | Color: Red | Color: Purple | Color: Magenta |

When the dynamic light scene is rendered by the one or more light sources 112-126, the changes (differences) in color between the first and the second light setting may not be visually perceivable by the user 130. When the user's perception 130 focuses on a single light source, say light source 122, that is the light source 122 subtends a first visual angle 10 at the user's eye, the difference (change) in the color and/or brightness of the light source 122 between the first and the second light setting is perceivable by the user. However, if the user's perception focuses on multiple proximate light sources, here, proximate light sources are light sources which are located at a physical distance that is below a distance proximity threshold, the multiple proximate light sources 112-126 subtend a second visual angle 20 at the user's eye, the differences in the color and/or brightness of the light sources when transitioning from the first to the second light setting are not visually perceived by the user. Even though in both cases, the user 130 is located at a same distance D from the light sources 112-126. The reason being that in the second case, although the human visual system may identify the average color and/or brightness of the plurality of proximate individually controllable light sources 112-126, the actual physical (spatial) arrangement of the rendered colors and/or brightness is treated as noise by the visual system. That is, the user 130 may not perceive that light source 112 changes (transits) from a red color to a green color between the first and the second light setting. The problem arises as the average color and/or brightness rendered by the light sources 112-126 according to the first light setting is approximately the same as the average color and/or brightness to be rendered by the light sources 112-126 according to the second light setting. That is, the difference between the average color and/or brightness (over the plurality of light sources) between the first and the second light setting is below a visual perceivability threshold, i.e., a threshold below which differences in color and/or brightness between the light settings are not perceivable by a human user. In a practical application, it can be expected that the user's perception focuses on the plurality of light sources 112-126, e.g., a user observing a Christmas light string. Thus, it is advantageous to provide a system to control said plurality of light sources 112-126 such that differences (changes) in color and/or brightness between the light settings of a dynamic light scene may be visually perceivable by the user 130.

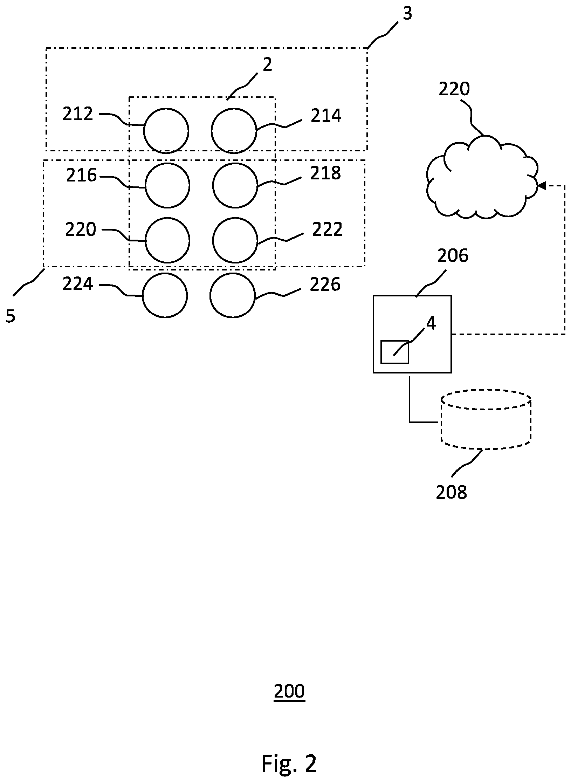

Fig. 2 shows a system 200 for controlling a plurality of light sources 212-226 of which color and/or brightness can be individually controlled. The plurality of light sources 212-226 may comprise light sources of different types, e.g., incandescent lamps, fluorescent lamps, white light producing LED, colored LED, etc. The brightness level of each from the plurality of light sources 212-226 may be individually controlled, the color of each from the plurality of light sources 212-226 may be individually controlled, or both the color and brightness level of each of each from the plurality of light sources 212-226 may be individually controlled. The light sources 212-226 may be configured to render a dynamic light scene, said dynamic light scene indicating at least a first light setting and a second light setting which are to be rendered sequentially by said plurality of light sources 212-226.

The system 200 comprises at least one data processor or controller 206. The system may further comprise at least one data repository or storage or memory 208 for storing computer program code instructions. The controller 206 may be communicatively coupled to the cloud 220. However, it should be noted that the controller 206 may be comprised in a central device (e.g., a smartphone, personal computer, a hub), a web-based portal, a combination of a central device and a web-based portal, etc. The controller 206 may be communicatively coupled to a memory module 208.

The controller 206 is configured to receive a dynamic light scene indicating at least a first light setting and a second light setting which are to be rendered sequentially by said plurality of light sources 212-226. A light setting comprises information on which sets of light sources from said plurality of light sources 212-226 will render the light setting and defines one or more illumination settings for each light source 212-226, e.g., color setting(s) and/or brightness setting(s), such as a color point and/or a brightness at which each of the light sources 212-226 is set. The controller 206 may comprise a receiver 4 for receiving the dynamic light scene. Alternatively, the controller 206 may retrieve said dynamic light scene from the memory 208 or the cloud 220.

The controller 206 is further configured to identify a set of light sources 2 comprising light sources 212-222, which are proximate to each other, of the plurality of light sources 212-226 and for which a difference score between (i) an average color and/or brightness to be rendered by said set of light sources 2 according to said first light setting and (ii) an average color and/or brightness to be rendered by said set of light sources 2 according to said second light setting is below a visual perceivability threshold. The visual perceivability threshold is a difference score below which differences in average color and/or brightness between the light settings are not perceivable by a human. The set 2 may comprise the plurality of light sources 212-226. There may be more than one set for which a difference score is below a visual perceivability threshold.

The difference score may comprise an absolute difference between (i) the average color and/or brightness to be rendered by said set of light sources 2 according to said first light setting and (ii) the average color and/or brightness to be rendered by said set of light sources 2 according to said second light setting. Alternatively, the difference score may comprise a probability of difference in color and/or brightness between (i) the average color and/or brightness to be rendered by said set of light sources 2 according to said first light setting and (ii) the average color and/or brightness to be rendered by said set of light sources 2 according to said second light setting. For example, if colors and/or brightness in the received light scene are indicated by a randomized function that assigns a probability to each of the light sources 212-226 to render a color and/or brightness from a set of colors and/or brightness levels, then, it may not be possible to determine an absolute difference between the average color and/or brightness of the first and the second light setting. **In** that case, a probability that the average color and/or brightness between the first and the second light scene is above a visual perceivability threshold may be calculated.

The controller 206 is configured to modify the received dynamic light scene such that for said set of light sources 2, the visual perceivability threshold is met. The controller 206 may be configured to determine a first modified light setting, a second modified light setting or both a first and a second light setting such that a difference score between (i) an average color and/or brightness to be rendered by said set of light sources 2 according to said first modified light setting and (ii) an average color and/or brightness to be rendered by said set of light sources 2 according to said modified second light setting is above a visual perceivability threshold, and a difference score between (i) an average color and/or brightness to be rendered by said set of light sources 2 according to said light scene and (ii) an average color and/or brightness to be rendered by said set of light sources 2 according to said modified light scene is below an allowable modification threshold. The controller 206 is further configured to control the plurality of light sources 212-226 to render the modified dynamic light scene.

In an example, the first light setting may indicate a first set of colors to be rendered by the set of light sources 2 and the second light setting may indicate a second set of colors to be rendered by the set of light sources 2. The first and the second sets of colors may be overlapping. For example, in Table 1, the first set of colors comprises the colors red, blue, green, and yellow, while the second set of colors comprises the same colors. The controller 206 may be configured to determine the modified first light setting by identifying a first subset of colors to be rendered by said set of light sources 2 according to said first modified light setting. Said first subset of colors may comprise colors from the first set of colors and/or second set of colors, say colors red and blue. The controller 206 may be configured to determine the modified second light setting by identifying a second subset of colors to be rendered by the set of light sources 2 according to said second modified light setting. Said second subset of colors may comprise colors from the first set of colors and/or second set of colors, say colors green and yellow. The first and second subsets of colors may not be entirely overlapping. In this example, the first and second subsets of colors are non-overlapping. The resulting modified first and second light settings are shown in Table 2.

**Table 2**

| Light source | 212 | 214 | 216 | 218 | 220 | 222 | 224 | 226 |
|---|---|---|---|---|---|---|---|---|
| 1^{st} modified setting | Color: Red | Color: Blue | Color: Red | Color: Blue | Color: Red | Color: Blue | Color: Magenta | Color: Purple |
| 2^{nd} modified setting | Color: Green | Color: Yellow | Color: Green | Color: Yellow | Color: Green | Color: Yellow | Color: Purple | Color: Magenta |

The user can perceive the effect of the modified dynamic light scene as the difference score indicative of the perceptual difference between the first and the second modified light setting is above the visual perceivability threshold. The number of changes (differences) between the first and the second modified light setting is sufficiently low for the user to perceive the dynamic effect. The number of colors to be rendered by the 1^{st} modified light scene and the number of colors to be rendered by the second modified light scene is reduced, such that the intended effect is visually perceivable by the user. The average color and/or brightness of the modified dynamic light scene is approximately the same as the received (initial) dynamic light scene, thus, the difference score between (i) the average color and/or brightness to be rendered by the set of light sources 2 according to the received dynamic light scene and (ii) the average color and/or brightness to be rendered by the set of light sources 2 according to the modified dynamic light scene is below an allowable modification threshold.

In another example, the colors and/or brightness in the received dynamic light scene may be indicated by a randomized function that may assign a probability to (some of) the light sources 212-226 to render a color and/or brightness from a set of colors and/or brightness levels. The dynamic light scene may indicate (associate) a probability to each of the light sources of the set of light sources 2 to render each color from a first set of colors (red, green, blue, yellow) according to the first light setting and may indicate (associate) a probability to each of the light sources of the set of light sources 2 to render each color from a second set of colors (red, green, blue, yellow) according to the second light setting. Table 3 shows an example received dynamic light scene. In this example, the first and the second sets of colors are overlapping. Yet, this is not a necessity. The set of light sources 2 render each color with equal probability. On average, each color (yellow, blue, red, green) has equal probability to be rendered by the set of light sources 2 in the first and second light settings. Thus, the probability of difference in color and/or brightness between (i) the average color to be rendered by said set of light sources 2 according to said first light setting and (ii) the average color to be rendered by said set of light sources 2 according to said second light setting is below the visual perceivability threshold.

**Table 3**

| Light source | 212 | 214 | 216 | 218 | 220 | 222 |
|---|---|---|---|---|---|---|
| 1^{st} light setting | P(yellow): 0.25 | P(yellow): 0.25 | P(yellow): 0.25 | P(yellow): 0.25 | P(yellow): 0.25 | P(yellow): 0.25 |
| | P(blue): 0.25 | P(blue): 0.25 | P(blue): 0.25 | P(blue): 0.25 | P(blue): 0.25 | P(blue): 0.25 |
| | P(red): 0.25 | P(red): 0.25 | P(red): 0.25 | P(red): 0.25 | P(red): 0.25 | P(red): 0.25 |
| | P(green): 0.25 | P(green): 0.25 | P(green): 0.25 | P(green): 0.25 | P(green): 0.25 | P(green): 0.25 |
| 2^{nd} light setting | P(yellow): 0.25 | P(yellow): 0.25 | P(yellow): 0.25 | P(yellow): 0.25 | P(yellow): 0.25 | P(yellow): 0.25 |
| | P(blue): 0.25 | P(blue): 0.25 | P(blue): 0.25 | P(blue): 0.25 | P(blue): 0.25 | P(blue): 0.25 |
| | P(red): 0.25 | P(red): 0.25 | P(red): 0.25 | P(red): 0.25 | P(red): 0.25 | P(red): 0.25 |
| | P(green): 0.25 | P(green): 0.25 | P(green): 0.25 | P(green): 0.25 | P(green): 0.25 | P(green): 0.25 |

The controller 206 may be configured to determine the modified first light setting by identifying a first subset of colors (say colors red and blue) to be rendered by said set of light sources 2 according to said first modified light setting and determine the modified second light setting by identifying a second subset of colors (say colors yellow and green) to be rendered by the set of light sources 2 according to said second modified light setting. The resulting modified first and second light settings are shown in Table 4.

**Table 4**

| Light source | 212 | 214 | 216 | 218 | 220 | 222 |
|---|---|---|---|---|---|---|
| 1^{st} modified light setting | P(blue): 0.5 | P(blue): 0.5 | P(blue): 0.5 | P(blue): 0.5 | P(blue): 0.5 | P(blue): 0.5 |
| | P(red): 0.5 | P(red): 0.5 | P(red): 0.5 | P(red): 0.5 | P(red): 0.5 | P(red): 0.5 |
| 2^{nd} modified light setting | P(yellow): 0.5 | P(yellow): 0.5 | P(yellow): 0.5 | P(yellow): 0.5 | P(yellow): 0.5 | P(yellow): 0.5 |
| | P(green): 0.5 | P(green): 0.5 | P(green): 0.5 | P(green): 0.5 | P(green): 0.5 | P(green): 0.5 |

The modified light scene may be perceivable by the user as according to the first modified light setting, only the first subset of colors may be rendered by the set of light sources 2, while in the second modified light sources only the second subset of colors (not entirely overlapping with the first) may be rendered by the set of light sources 2. Thus, the probability of difference between (i) the average color to be rendered by the set of light sources 2 according to the first modified light setting is sufficiently different from (ii) the average color and/or brightness to be rendered by the set of light sources 2 according to the modified second light setting is above the visual perceivability threshold. The average color and/or brightness of the modified dynamic light scene is approximately the same as the received (initial) dynamic light scene, thus, the difference score between (i) the average color and/or brightness to be rendered by the set of light sources 2 according to the received dynamic light scene and (ii) the average color and/or brightness to be rendered by the set of light sources 2 according to the modified dynamic light scene is below an allowable modification threshold.

In another example, the controller 206 may be configured to determine the modified first light setting by identifying a first subset of colors, say red and blue, to be rendered by a first subset 3 (upper part) of said set of light sources 2, and a second subset of colors, say, green and yellow, to be rendered by a second subset 5 (lower part) of said set of light sources 2. The first and second subsets of colors may comprise colors from the first set of colors and/or second set of colors. The first and second subset of colors and the first 3 and second 5 subset of the set of light sources 2 are not entirely overlapping. Preferably, the first and second subset of colors and the first 3 and second 5 subset of the set of light sources 2 are non- overlapping. This allows for light effects to clearly differentiate in space as colors red and blue are to be rendered in the upper part of the plurality of light sources and colors green and yellow are to be rendered in the lower part of the plurality of light sources. Thus, for the subsets 3 and 5, the difference score between (i) the average color to be rendered by said subset of light sources according to the modified first light setting and (ii) the average color and/or brightness to be rendered by said subset of light sources according to said modified second light setting is above a visual perceivability threshold. The controller 206 may be configured to determine the modified second light setting by identifying the first subset of colors, red and blue, to be rendered by the second subset 5 of said set of light sources 2, and the second subset of colors, green and yellow, to be rendered by the first subset 3 of said set of light sources 2. Like this, the average color and/or brightness of the modified dynamic light scene is approximately the same as the received (initial) dynamic light scene. The resulting modified first and second light settings are shown in Table 5.

**Table 5**

| Light source | 212 | 214 | 216 | 218 | 220 | 222 | 224 | 226 |
|---|---|---|---|---|---|---|---|---|
| 1^{st} modified light setting | Red | Blue | Green | Yellow | Green | Yellow | Magenta | Purple |
| 2^{nd} modified light setting | Green | Yellow | Red | Blue | Red | Blue | Purple | Magenta |

In a further example, the controller 206 may be configured to determine an intermediate light setting to be rendered between said first and second light setting for which, a difference score between (i) an average color and/or brightness to be rendered by said set of light sources 2 according to said first light setting and (ii) an average color and/or brightness to be rendered by said set of light sources 2 according to said intermediate light setting is above a visual perceivability threshold, and a difference score between (i) an average color and/or brightness to be rendered by said set of light sources 2 according to said second light setting and (ii) an average color and/or brightness to be rendered by said set of light sources 2 according to said intermediate light setting is above a visual perceivability threshold. For example, the controller 206 may be configured to identify a transition color, say white color, to be rendered by said set of light sources 2 according to the intermediate light setting. The resulting modified light scene is shown in Table 6.

**Table 6**

| Light source | 212 | 214 | 216 | 218 | 220 | 222 | 224 | 226 |
|---|---|---|---|---|---|---|---|---|
| 1^{st} light setting | Red | Green | Yellow | Blue | Green | Yellow | Magenta | Purple |
| Intermediate light setting | White | White | White | White | White | White | White | White |
| 2^{nd} light setting | Green | Yellow | Green | Yellow | Blue | Red | Purple | Magenta |

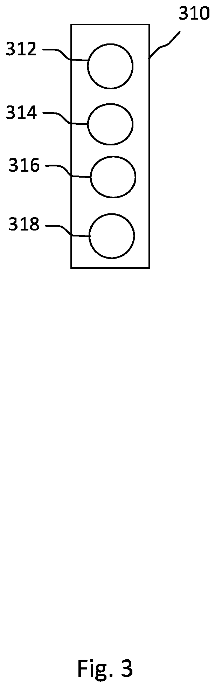

Fig. 3 shows an example of a device 310 comprising a plurality of light sources 312-318. The controller 206 may be configured receive an input indicative of which light sources of said plurality of light sources 312-318 are proximate to each other. The input may comprise a relative position of said plurality of light sources 312-318 and/or a type of said lighting device 310. For example, said input may be an image and said controller may be configured to determine the relative position of the plurality of light sources 312-318 based on the image. By for example applying a computer vision machine learning algorithm on the image. In another example, said input may comprise a QR code indicative of the type of the lighting device 310. The controller 206 may be configured to determine which light sources of said plurality of light sources 312-316 are proximate to each other based on the type of the lighting device 310. For example, if the lighting device 310 is of a light string type, the controller 206 may identify light sources that are proximate to each other by identifying a predetermined, say 4, number of light sources adjacent to each other based on the address of the light sources.

The controller 206 may be further configured to receive an input indicative of an ambient light level and modify said dynamic light scene based on said ambient level. For example, the controller may be configured to modify said dynamic light scene upon determination that said ambient level is below an ambient light level threshold, say 100 lux. The controller 206 may receive an input from an ambient light sensor indicative of current ambient light level. Alternatively, the controller 206 may be configured to receive time data and determine an ambient light level from said time data, for example by retrieving from a memory 208 associations between time data and ambient light levels.

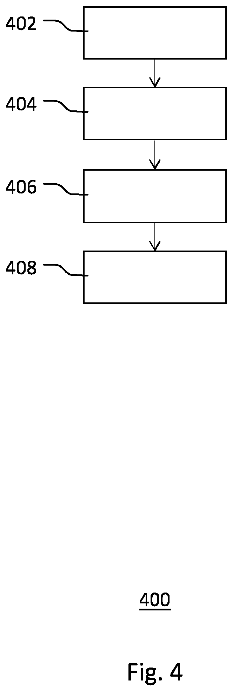

Fig. 4 shows a method 400 for controlling a plurality of light sources 212-226 of which a color and/or brightness can be individually controlled, said method comprising the steps of:
- receiving 402 a dynamic light scene indicating at least a first light setting and a second light setting which are to be rendered sequentially by said plurality of light sources 212-226;
- identifying 404 a set of light sources, which are proximate to each other, of the plurality of light sources and for which a difference score indicative of a perceptual difference between said modified first light setting and said modified second light setting is above a visual perceivability threshold;
- modifying 406 the received dynamic light scene, by determining a modified dynamic light scene, such that for said set of light sources the visual perceivability threshold is met, and
- controlling 408 said plurality of light sources to render said modified dynamic light scene.

The method 400 may be executed by computer program code of a computer program product when the computer program product is run on a processing unit of a computing device, such as the controller 206.

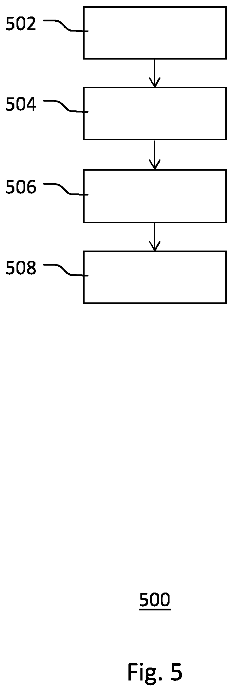

Fig. 5 shows a method 500 for controlling a plurality of light sources 212-226 of which a color and/or brightness can be individually controlled, said method comprising the steps of:
- receiving 502 a dynamic light scene indicating at least a first light setting and a second light setting which are to be rendered sequentially by said plurality of light sources 212-226;
- identifying 504 a set of light sources, which are proximate to each other, of the plurality of light sources and for which a difference score between (i) an average color and/or brightness to be rendered by said set of light sources according to said first light setting and (ii) an average color and/or brightness to be rendered by said set of light sources according to said second light setting is below a visual perceivability threshold;
- modifying 506 the received dynamic light scene, by determining a modified dynamic light scene, such that for said set of light sources the visual perceivability threshold is met, and
- controlling 508 said plurality of light sources to render said modified dynamic light scene.

The methods 400, 500 may be executed by computer program code of a computer program product when the computer program product is run on a processing unit of a computing device, such as the controller 206.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer or processing unit. In the device claim enumerating several means, several of these means may be embodied by one and the same item of hardware.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors or even the 'cloud'.

Storage media suitable for storing computer program instructions include all forms of non-volatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A controller (206) for controlling a plurality of light sources (212-226) of which a color and/or brightness can be individually controlled, said controller configured to:
- receive a dynamic light scene indicating at least a first light setting and a second light setting which are to be rendered sequentially by said plurality of light sources;
**characterized in that** the controller (206) is further configured to:
- identify a set of light sources of the plurality of light sources for which a distance between said set of light sources is below a proximity threshold and for which a difference score indicative of a perceptual difference between said first and second light setting is below a visual perceivability threshold;
- modify the received dynamic light scene, by determining a modified dynamic light scene, such that for said set of light sources the difference score indicative of the perceptual difference between the first and second light setting is above the visual perceivability threshold, and
- control said plurality of light sources to render said modified dynamic light scene.

2. The controller according to claim 1, wherein said difference score being indicative of the perceptual difference between said first and second light setting comprises a color difference between (i) an average color and/or brightness to be rendered by said set of light sources according to said first light setting and (ii) an average color and/or brightness to be rendered by said set of light sources according to said second light setting.

3. The controller according to claim 1, wherein said first light setting indicates a first set of colors to be rendered by said set of light sources and said second light setting indicates a second set of colors to be rendered by said set of light sources, and wherein said difference score is indicative of a color distance between said first and second sets of colors.

4. The controller according to claim 1, wherein said controller being configured to modify the received dynamic light scene comprises said controller being configured to determine a modified first and/or second light setting, different from said first and/or second light setting, wherein the modified dynamic light scene is indicative of the modified first light setting and the modified second light setting, for which:
- a second difference score indicative of a perceptual difference between said modified first light setting and said modified second light setting is above the visual perceivability threshold; and
- a third difference score indicative of a perceptual difference between said received dynamic light scene and said modified dynamic light scene is below an allowable modification threshold.

5. The controller according to claims 3 and 4, and wherein said controller being configured to determine said modified dynamic light scene comprises said controller being configured to:
- determine the modified first light setting by identifying a first subset of colors to be rendered by said set of light sources according to said first modified light setting, said first subset of colors comprising colors from the first set of colors and/or second set of colors,
- determine the modified second light setting by identifying a second subset of colors to be rendered by said set of light sources according to said second modified light setting, said second subset of colors comprising colors from the first set of colors and/or second set of colors, and wherein said first subset of colors and said second subset of colors are not entirely overlapping.

6. The controller according to claim 4, wherein said controller being configured to determine said modified dynamic light scene comprises said controller being configured to:
- determine the modified first light setting by identifying a first subset of colors to be rendered by a first subset of said set of light sources and a second subset of colors to be rendered by a second subset of said set of light sources, said first and second subsets of colors comprising colors from the first set of colors and/or second set of colors, and wherein said first and second subset of colors and said first and second subset of said set of light sources are not entirely overlapping;
- determine the modified second light setting by identifying the first subset of colors to be rendered by the second subset of said set of light sources and the second subset of colors to be rendered by the first subset of said set of light sources.

7. The controller according to claim 1, wherein said controller being configured to modify the received dynamic light scene comprises said controller being configured to determine an intermediate light setting to be rendered between said first and second light setting, for which:
- a second difference score indicative of a perceptual difference between said first light setting and said intermediate light setting is above a visual perceivability threshold;
- a third difference score indicative of a perceptual difference between said second light setting and said intermediate light setting is above a visual perceivability threshold.

8. The controller according to any preceding claim wherein said controller being configured to identify said set of light sources which are proximate to each other comprises said controller being configured to:
- receive an input indicative of which light sources of said plurality of light sources are proximate to each other, said input comprising a relative position of said plurality of light sources and/or a type of a lighting device, said lighting device comprising the plurality of light sources.

9. The controller according to any preceding claim, wherein said controller is further configured to receive an input indicative of an ambient light level and modify said received dynamic light scene based on said ambient level.

10. A system (200) for controlling a plurality of light sources (212-226) of which a color and/or brightness can be individually controlled, said system comprising said plurality of light sources, and a controller according to claim 1.

11. A method (400) for controlling a plurality of light sources of which a color and/or brightness can be individually controlled, said method comprising the steps of:
- receiving (402) a dynamic light scene indicating at least a first light setting and a second light setting which are to be rendered sequentially by said plurality of light sources;
**characterized by**:
- identifying (404) a set of light sources of the plurality of light sources for which a distance between said set of light sources is below a proximity threshold and for which a difference score indicative of a perceptual difference between said first and second light setting is below a visual perceivability threshold;
- modifying (406) the received dynamic light scene, by determining a modified dynamic light scene, such that for said set of light sources the difference score indicative of the perceptual difference between the first and second light setting is above the visual perceivability threshold, and
- controlling (408) said plurality of light sources to render said modified dynamic light scene.

12. A computer program product for a computing device arranged for controlling a plurality of light sources, the computer program product comprising computer program code to perform the method of claim 11 when the computer program product is run on a processing unit of the computing device.

## Patentansprüche

1. Steuerung (206) zum Steuern einer Vielzahl von Lichtquellen (212-226), deren Farbe und/oder Helligkeit individuell gesteuert werden kann, wobei die Steuerung konfiguriert ist zum:
- Empfangen einer dynamischen Lichtszene, die mindestens eine erste Lichteinstellung und eine zweite Lichteinstellung angibt, welche sequenziell durch die Vielzahl von Lichtquellen wiederzugeben sind;
**dadurch gekennzeichnet, dass** die Steuerung (206) ferner konfiguriert ist zum:
- Identifizieren eines Satzes von Lichtquellen der Vielzahl von Lichtquellen, für den ein Abstand zwischen dem Satz von Lichtquellen unter einem Näherungsschwellenwert liegt und für den ein Differenzwert, der einen Wahrnehmungsunterschied zwischen der ersten und zweiten Lichteinstellung angibt, unter einem visuellen Wahrnehmbarkeitsschwellenwert liegt;
- Modifizieren der empfangenen dynamischen Lichtszene durch Bestimmen einer modifizierten dynamischen Lichtszene, derart, dass für den Satz von Lichtquellen der Differenzwert, der den Wahrnehmungsunterschied zwischen der ersten und der zweiten Lichteinstellung angibt, über der visuellen Wahrnehmbarkeitsschwelle liegt, und
- Steuern der Vielzahl von Lichtquellen, um die modifizierte dynamische Lichtszene wiederzugeben.

2. Steuerung nach Anspruch 1, wobei der Differenzwert, der den Wahrnehmungsunterschied zwischen der ersten und der zweiten Lichteinstellung anzeigt, eine Farbdifferenz zwischen (i) einer durchschnittlichen Farbe und/oder Helligkeit, die von dem Satz von Lichtquellen gemäß der ersten Lichteinstellung wiederzugeben ist, und (ii) einer durchschnittlichen Farbe und/oder Helligkeit, die von dem Satz von Lichtquellen gemäß der zweiten Lichteinstellung wiederzugeben ist, umfasst.

3. Steuerung nach Anspruch 1, wobei die erste Lichteinstellung einen ersten Satz von Farben angibt, die durch den Satz von Lichtquellen wiederzugeben sind, und die zweite Lichteinstellung einen zweiten Satz von Farben angibt, die durch den Satz von Lichtquellen wiederzugeben sind, und wobei der Differenzwert bezeichnend für einen Farbabstand zwischen dem ersten und dem zweiten Satz von Farben ist.

4. Steuerung nach Anspruch 1, wobei, dass die Steuerung konfiguriert ist, um die empfangene dynamische Lichtszene zu modifizieren, umfasst, dass die Steuerung konfiguriert ist, um eine modifizierte erste und/oder zweite Lichteinstellung zu bestimmen, die sich von der ersten und/oder zweiten Lichteinstellung unterscheidet, wobei die modifizierte dynamische Lichtszene die modifizierte erste Lichteinstellung und die modifizierte zweite Lichteinstellung angibt, für welche:
- ein zweiter Differenzwert, der einen Wahrnehmungsunterschied zwischen der modifizierten ersten Lichteinstellung und der modifizierten zweiten Lichteinstellung anzeigt, über der visuellen Wahrnehmbarkeitsschwelle liegt; und
- ein dritter Differenzwert, der einen Wahrnehmungsunterschied zwischen der empfangenen dynamischen Lichtszene und der modifizierten dynamischen Lichtszene angibt, unter einem zulässigen Modifikationsschwellenwert liegt.

5. Steuerung nach den Ansprüchen 3 und 4, und wobei das Konfiguriertsein der Steuerung zum Bestimmen der modifizierten dynamischen Lichtszene umfasst, dass die Steuerung konfiguriert ist zum:
- Bestimmen der modifizierten ersten Lichteinstellung durch Identifizieren einer ersten Teilmenge von Farben, die von dem Satz von Lichtquellen gemäß der ersten modifizierten Lichteinstellung wiederzugeben sind, wobei die erste Teilmenge von Farben Farben aus dem ersten Satz von Farben und/oder dem zweiten Satz von Farben umfasst,
- Bestimmen der modifizierten zweiten Lichteinstellung durch Identifizieren einer zweiten Teilmenge von Farben, die von dem Satz von Lichtquellen gemäß der zweiten modifizierten Lichteinstellung wiederzugeben sind, wobei die zweite Teilmenge von Farben Farben aus dem ersten Satz von Farben und/oder dem zweiten Satz von Farben umfasst, und wobei die erste Teilmenge von Farben und die zweite Teilmenge von Farben nicht vollständig überlappend sind.

6. Steuerung nach Anspruch 4, wobei das Konfiguriertsein der Steuerung zum Bestimmen der modifizierten dynamischen Lichtszene umfasst, dass die Steuerung konfiguriert ist zum:
- Bestimmen der modifizierten ersten Lichteinstellung durch Identifizieren einer ersten Teilmenge von Farben, die durch eine erste Teilmenge des Satzes von Lichtquellen wiederzugeben ist, und einer zweiten Teilmenge von Farben, die durch eine zweite Teilmenge des Satzes von Lichtquellen wiederzugeben ist, wobei die ersten und zweiten Teilmengen von Farben Farben aus dem ersten Satz von Farben und/oder dem zweiten Satz von Farben umfassen, und wobei die erste und zweite Teilmenge von Farben und die erste und zweite Teilmenge des Satzes von Lichtquellen sich nicht vollständig überlappen;
- Bestimmen der modifizierten zweiten Lichteinstellung durch Identifizieren der ersten Teilmenge von Farben, die durch die zweite Teilmenge des Satzes von Lichtquellen wiederzugeben ist, und der zweiten Teilmenge von Farben, die durch die erste Teilmenge des Satzes von Lichtquellen wiederzugeben ist.

7. Steuerung nach Anspruch 1, wobei das Konfiguriertsein der Steuerung zum Modifizieren der empfangenen dynamischen Lichtszene umfasst, dass die Steuerung konfiguriert ist, um eine Zwischenlichteinstellung zu bestimmen, die zwischen der ersten und der zweiten Lichteinstellung wiedergegeben werden soll, für die:
- ein zweiter Differenzwert, der einen Wahrnehmungsunterschied zwischen der genannten ersten Lichteinstellung und der genannten Zwischenlichteinstellung angibt, über einem visuellen Wahrnehmbarkeitsschwellenwert liegt;
- ein dritter Differenzwert, der einen Wahrnehmungsunterschied zwischen der zweiten Lichteinstellung und der Zwischenlichteinstellung angibt, über einem visuellen Wahrnehmbarkeitsschwellenwert liegt.

8. Steuerung nach einem der vorstehenden Ansprüche, wobei, dass die Steuerung konfiguriert ist, um den Satz von Lichtquellen zu identifizieren, die nahe beieinander liegen, umfasst, dass die Steuerung konfiguriert ist zum:
- Empfangen einer Eingabe, die angibt, welche Lichtquellen der Vielzahl von Lichtquellen sich nahe beieinander befinden, wobei die Eingabe eine relative Position der Vielzahl von Lichtquellen und/oder einen Typ einer Beleuchtungsvorrichtung umfasst, wobei die Beleuchtungsvorrichtung die Vielzahl von Lichtquellen umfasst.

9. Steuerung nach einem der vorstehenden Ansprüche, wobei die Steuerung ferner konfiguriert ist, um eine Eingabe zu empfangen, die ein Umgebungslichtniveau angibt, und die empfangene dynamische Lichtszene basierend auf dem Umgebungsniveau zu modifizieren.

10. System (200) zum Steuern einer Vielzahl von Lichtquellen (212-226), deren Farbe und/oder Helligkeit individuell gesteuert werden kann, wobei das System die Vielzahl von Lichtquellen und eine Steuerung nach Anspruch 1 umfasst.

11. Verfahren (400) zum Steuern einer Vielzahl von Lichtquellen, deren Farbe und/oder Helligkeit individuell gesteuert werden kann, das Verfahren umfassend die Schritte:
- Empfangen (402) einer dynamischen Lichtszene, die mindestens eine erste Lichteinstellung und eine zweite Lichteinstellung angibt, welche sequenziell durch die Vielzahl von Lichtquellen wiederzugeben sind; **gekennzeichnet durch:**
- Identifizieren (404) eines Satzes von Lichtquellen der Vielzahl von Lichtquellen, für den ein Abstand zwischen dem Satz von Lichtquellen unter einem Näherungsschwellenwert liegt und für den ein Differenzwert, der einen Wahrnehmungsunterschied zwischen der ersten und zweiten Lichteinstellung angibt, unter einem visuellen Wahrnehmbarkeitsschwellenwert liegt;
- Modifizieren (406) der empfangenen dynamischen Lichtszene durch Bestimmen einer modifizierten dynamischen Lichtszene, derart, dass für den Satz von Lichtquellen der Differenzwert, der den Wahrnehmungsunterschied zwischen der ersten und der zweiten Lichteinstellung angibt, über der visuellen Wahrnehmbarkeitsschwelle liegt, und
- Steuern (408) der Vielzahl von Lichtquellen, um die modifizierte dynamische Lichtszene wiederzugeben.

12. Computerprogrammprodukt für eine Rechenvorrichtung, die zum Steuern einer Vielzahl von Lichtquellen eingerichtet ist, das Computerprogrammprodukt umfassend Computerprogrammcode, um das Verfahren nach Anspruch 11 durchzuführen, wenn das Computerprogrammprodukt auf einer Verarbeitungseinheit der Rechenvorrichtung ausgeführt wird.

## Revendications

1. Dispositif de commande (206) permettant de commander une pluralité de sources de lumière (212 à 226) dont une couleur et/ou une luminosité peuvent être commandées individuellement, ledit dispositif de commande étant configuré pour :
- recevoir une scène de lumière dynamique indiquant au moins un premier réglage de lumière et un second réglage de lumière qui doivent être restitués de manière séquentielle par ladite pluralité de sources de lumière ;
**caractérisé en ce que** le dispositif de commande (206) est en outre configuré pour :
- identifier un ensemble de sources de lumière de la pluralité de sources de lumière pour lesquelles une distance entre ledit ensemble de sources de lumière est inférieure à un seuil de proximité et pour lesquelles un score de différence indiquant une différence perceptible entre lesdits premier et second réglages de lumière est inférieur à un seuil de caractère perceptible visuel ;
- modifier la scène de lumière dynamique reçue, en déterminant une scène de lumière dynamique modifiée, de telle sorte que, pour ledit ensemble de sources de lumière, le score de différence indiquant la différence perceptible entre les premier et second réglages de lumière est supérieur au seuil de caractère perceptible visuel, et
- commander ladite pluralité de sources de lumière pour restituer ladite scène de lumière dynamique modifiée.

2. Dispositif de commande selon la revendication 1, dans lequel ledit score de différence indiquant la différence perceptible entre lesdits premier et second réglages de lumière comprend une différence de couleur entre (i) une couleur et/ou une luminosité moyennes à restituer par ledit ensemble de sources de lumière selon ledit premier réglage de lumière et (ii) une couleur et/ou une luminosité moyennes à restituer par ledit ensemble de sources de lumière selon ledit second réglage de lumière.

3. Dispositif de commande selon la revendication 1, dans lequel ledit premier réglage de lumière indique un premier ensemble de couleurs à restituer par ledit ensemble de sources de lumière et ledit second réglage de lumière indique un second ensemble de couleurs à restituer par ledit ensemble de sources de lumière, et dans lequel ledit score de différence indique une distance de couleur entre lesdits premier et second ensembles de couleurs.

4. Dispositif de commande selon la revendication 1, dans lequel ledit dispositif de commande étant configuré pour modifier la scène de lumière dynamique reçue comprend ledit dispositif de commande étant configuré pour déterminer un premier et/ou un second réglage de lumière modifié, différent dudit premier et/ou dudit second réglage de lumière, dans lequel la scène de lumière dynamique modifiée indique le premier réglage de lumière modifié et le second réglage de lumière modifié, pour lesquels :
- un deuxième score de différence indiquant une différence perceptible entre ledit premier réglage de lumière modifié et ledit second réglage de lumière modifié est supérieur au seuil de de caractère perceptible visuel ; et
- un troisième score de différence indiquant une différence perceptible entre ladite scène de lumière dynamique reçue et ladite scène de lumière dynamique modifiée est inférieur à un seuil de modification admissible.

5. Dispositif de commande selon les revendications 3 et 4, et dans lequel ledit dispositif de commande étant configuré pour déterminer ladite scène de lumière dynamique modifiée comprend ledit dispositif de commande étant configuré pour :
- déterminer le premier réglage de lumière modifié en identifiant un premier sous-ensemble de couleurs à restituer par ledit ensemble de sources de lumière selon ledit premier réglage de lumière modifié, ledit premier sous-ensemble de couleurs comprenant des couleurs du premier ensemble de couleurs et/ou du second ensemble de couleurs,
- déterminer le second réglage de lumière modifié en identifiant un second sous-ensemble de couleurs à restituer par ledit ensemble de sources de lumière selon ledit second réglage de lumière modifié, ledit second sous-ensemble de couleurs comprenant des couleurs du premier ensemble de couleurs et/ou du second ensemble de couleurs, et dans lequel ledit premier sous-ensemble de couleurs et ledit second sous-ensemble de couleurs ne se chevauchent pas entièrement.

6. Dispositif de commande selon la revendication 4, dans lequel ledit dispositif de commande étant configuré pour déterminer ladite scène de lumière dynamique modifiée comprend ledit dispositif de commande étant configuré pour :
- déterminer le premier réglage de lumière modifié en identifiant un premier sous-ensemble de couleurs à restituer par un premier sous-ensemble dudit ensemble de sources de lumière et un second sous-ensemble de couleurs à restituer par un second sous-ensemble dudit ensemble de sources de lumière, lesdits premier et second sous-ensembles de couleurs comprenant des couleurs du premier ensemble de couleurs et/ou du second ensemble de couleurs, et dans lequel lesdits premier et second sous-ensembles de couleurs et lesdits premier et second sous-ensembles dudit ensemble de sources de lumière ne se chevauchent pas entièrement ;
- déterminer le second réglage de lumière modifié en identifiant le premier sous-ensemble de couleurs à restituer par le second sous-ensemble dudit ensemble de sources de lumière et le second sous-ensemble de couleurs à restituer par le premier sous-ensemble dudit ensemble de sources de lumière.

7. Dispositif de commande selon la revendication 1, dans lequel ledit dispositif de commande étant configuré pour modifier la scène de lumière dynamique reçue comprend ledit dispositif de commande étant configuré pour déterminer un réglage de lumière intermédiaire à restituer entre lesdits premier et second réglages de lumière, pour lesquels :
- un deuxième score de différence indiquant qu'une différence perceptible entre ledit premier réglage de lumière et ledit réglage de lumière intermédiaire est supérieure à un seuil de caractère perceptible visuel ;
- un troisième score de différence indiquant qu'une différence perceptible entre ledit second réglage de lumière et ledit réglage de lumière intermédiaire est supérieure à un seuil de caractère perceptible visuel.

8. Dispositif de commande selon l'une quelconque revendication précédente, dans lequel ledit dispositif de commande étant configuré pour identifier ledit ensemble de sources de lumière qui sont proches les unes des autres comprend ledit dispositif de commande étant configuré pour :
- recevoir une entrée indiquant quelles sources de lumière de ladite pluralité de sources de lumière sont proches les unes des autres, ladite entrée comprenant une position relative de ladite pluralité de sources de lumière et/ou un type de dispositif d'éclairage, ledit dispositif d'éclairage comprenant la pluralité de sources de lumière.

9. Dispositif de commande selon l'une quelconque revendication précédente, dans lequel ledit dispositif de commande est en outre configuré pour recevoir une entrée indiquant un niveau de lumière ambiant et modifier ladite scène de lumière dynamique reçue sur la base dudit niveau ambiant.

10. Système (200) permettant de commander une pluralité de sources de lumière (212 à 226) dont une couleur et/ou une luminosité peuvent être commandées individuellement, ledit système comprenant ladite pluralité de sources de lumière, et un dispositif de commande selon la revendication 1.

11. Procédé (400) permettant de commander une pluralité de sources de lumière dont une couleur et/ou une luminosité peuvent être commandées individuellement, ledit procédé comprenant les étapes consistant à :
- recevoir (402) une scène de lumière dynamique indiquant au moins un premier réglage de lumière et un second réglage de lumière qui doivent être restitués de manière séquentielle par ladite pluralité de sources de lumière ; **caractérisé par** :
- l'identification (404) d'un ensemble de sources de lumière de la pluralité de sources de lumière pour lesquelles une distance entre ledit ensemble de sources de lumière est inférieure à un seuil de proximité et pour lesquelles un score de différence indiquant une différence perceptible entre lesdits premier et second réglages de lumière est inférieur à un seuil de caractère perceptible visuel ;
- la modification (406) de la scène de lumière dynamique reçue, en déterminant une scène de lumière dynamique modifiée, de telle sorte que, pour ledit ensemble de sources de lumière, le score de différence indiquant la différence perceptible entre les premier et second réglages de lumière est supérieur au seuil de caractère perceptible visuel, et
- la commande (408) de ladite pluralité de sources de lumière pour restituer ladite scène de lumière dynamique modifiée.

12. Produit-programme d'ordinateur destiné à un dispositif informatique conçu pour commander une pluralité de sources de lumière, le produit-programme d'ordinateur comprenant un code de programme informatique pour réaliser le procédé selon la revendication 11 lorsque le produit-programme d'ordinateur est exécuté sur une unité de traitement du dispositif informatique.
